# EUROPÄISCHE PATENTANMELDUNG

(11) **EP 1 564 322 A1**
(43) Veröffentlichungstag der Anmeldung: **17.08.2005**
(21) Anmeldenummer: 05010558.4
(22) Anmeldetag: 05.06.2002
(51) Int. Cl.: D04H 13/00, D04H 5/08, D04H 11/08

(54) **Gemustertes textiles Flächengebilde**

(30) Priorität: 03.07.2001 DE 10132103
(62) Teilanmeldung aus: 02012289.1
(71) Anmelder: Filzfabrik Fulda GmbH & Co., 36035 Fulda (DE)
(72) Erfinder: Winter, Ralf, 36137 Grossenlüder (DE)
(74) Vertreter: KEIL & SCHAAFHAUSEN

(57) **Zusammenfassung**

Die Erfindung bezieht sich auf ein textiles Flächengebilde aus wenigstens einer Trägerschicht und einer mit dieser vernadelten, eine optisch uneinheitliche, rapportfreie Oberseite aufweisenden Nutzschicht, welche neben Stapelfasern eine Vielzahl an stochastisch verteilten Faserelementen mit vorgegebener, ggf. unterschiedlicher geometrischer Gestalt enthält, welche sich in ihrer Farbe und/oder Faserbeschaffenheit von den Stapelfasern unterscheiden. Erfindungsgemäß sind diese Flächengebilde erhältlich durch ein Verfahren, bei dem zunächst aus den Stapelfasern und den Faserelementen ein ggf. verfestigter Vliesstoff gebildet wird, bei dem die Faserelemente überwiegend an einer Seite des Vliesstoffes angeordnet sind. Die Verfestigung des Vliesstoffes kann nach den in der Vliesstoffindustrie bekannten Verfahren, d. h. nach mechanischen und/oder chemischen und/oder thermischen Verfahren erfolgen. Anschließend wird der ggf. verfestigte Vliesstoff der Trägerschicht zugeführt und dann mit der Trägerschicht ggf. mehrfach derart vernadelt, dass der Vliesstoff die Nutzschicht bildet.

## Beschreibung

Die vorliegende Erfindung bezieht sich auf ein textiles Flächengebilde aus wenigstens einer Trägerschicht und einer mit dieser vernadelten, eine optisch uneinheitliche, im Wesentlichen rapportfreie Oberseite aufweisenden Nutzschicht, welche neben Stapelfasern eine Vielzahl an Faserelementen mit vorgegebener, ggf. unterschiedlicher geometrischer Gestalt enthält, welche sich in ihrer Farbe und/oder Faserbeschaffenheit von den Stapelfasern unterscheiden. Diese textilen Flächengebilde sind beispielsweise als Bodenbelag, Fußmatte, Dekor-Material oder dgl. Verkleidungsmaterial verwendbar.

Textile Flächengebilde, insbesondere Vliesstoffe aus Stapelfasern, werden herkömmlicherweise nach mechanischen oder aerodynamischen Verfahren hergestellt.

Bei dem mechanischen Kardierverfahren wird zunächst auf Krempeln ein Stapelfaserflor gebildet, welcher anschließend mittels eines Kreuzlegers abgetafelt wird. Der abgetafelte Krempelflor kann dann mechanisch und/oder chemisch und/oder thermisch verfestigt werden, so dass Vliesstoffe mit hoher Abriebsfestigkeit herstellbar sind, die bspw. als Boden- oder Wandbeläge Verwendung finden können.

Bei den bekannten aerodynamischen Verfahren werden Vliesstoffe erzeugt, die keine hohe Festigkeit aufweisen. Hierbei werden mechanisch voraufgelöste Stapelfasern in einen kräftigen Luftstrom eingeführt, der z.B. gegen eine rotierende, perforierte Trommel geblasen wird, auf deren Oberfläche die Fasern ein wirrgelegtes Vlies bilden, während die Luft durch die Öffnungen dieser Trommel abgesaugt wird. Aufgrund der unzureichenden Festigkeit der so hergestellten Vliesstoffe, eignet sich das aerodynamische Verfahren nicht zur Herstellung von Bodenbelägen, sondern ausschließlich zur Herstellung von textilen Flächengebilden, bei denen es nicht auf eine hohe Abriebfestigkeit ankommt, bspw. solchen, die in Polsterungen eingesetzt werden.

Zur Herstellung optisch uneinheitlicher, insbesondere farblich uneinheitlicher, textiler Flächengebilde können den Stapelfasern vor der Vliesbildung geeignete farbige Faserelemente zugemischt werden, wobei jedoch insbesondere bei der Herstellung nach dem mechanischen Kardierverfahren der Nachteil besteht, dass die Faserelemente durch die Kardierprozess zumindest teilweise zerstört werden.

Aus der DE 39 04 526 A1 ist ein Verfahren zur Herstellung eines aus zwei Nadelvliesschichten bestehenden Bodenbelages bekannt, bei dem die Oberschicht eine dreidimensionale, reliefartige Oberflächenstruktur aufweist. Um eine Beschädigung dieser Reliefstruktur beim abschließenden Vernadelungsschritt zu vermeiden, wird die Unterschicht gegen die Unterseite der Oberschicht genadelt, jedoch lediglich bis zu einer Tiefe der Oberschicht, die geringer ist als die Stärke des unstrukturierten Basisteils der Oberschicht. Dieses Verfahren erfordert eine abschließende Imprägnierung beider Schichten mit Bindemittel und ist nur für diejenigen Vliesstoffe geeignet, deren Ober- und Unterschicht als Nadelvlies vorliegen.

In der EP 0 013 426 B1 wird ein textiles Flächengebilde beschrieben, welches aus einer faserhaltigen, als Kontrastschicht ausgebildeten Trägerschicht sowie einer mit dieser vernadelten, aus einer Anzahl von einzelnen Endlosfilamenten zusammengesetzten Oberschicht besteht, wobei die Endlosfilamente auf der Kontrastträgerschicht im Abstand voneinander so angeordnet sind, dass die Kontrastträgerschicht durch die Zwischenräume zwischen diesen Endlosfilamenten sichtbar ist. Die Oberflächengestaltung dieser Flächengebilde ist jedoch nicht rapportfrei und überdies aufgrund der Endlosfilamente auf streifenförmige Muster beschränkt.

Aus der EP 0 013 428 B1 ist ein textiles Flächengebilde mit einer nicht gewebten Faserschicht bekannt, die eine Vielzahl voneinander abgegrenzter Fasergebilde aus sphärisch verwickelten Fasern, sogenannte "Kugelgarne", enthält, die mittels Vernadelungsfasern verfestigt sind. Um als Wand- oder Bodenbelag Verwendung zu finden, kann eine solche kugelgarnhaltige Fasergebildeschicht auch mit einer Trägerschicht vernadelt sein, wobei als Trägerschicht sowohl passiv nadelfähige Flächengebilde, bspw. eine Kunststofffolie, eine Gitterfolie oder ein Netz, als auch aktiv nadelfähige Flächengebilde in Frage kommen. Durch die aktive Vernadelung werden allerdings die Kugelgarne mehr oder weniger stark zusammengedrückt, weshalb abgeplattete, eher filzartig verformte Gebilde mit einer beeinträchtigten Hoch/Tief-Struktur erhalten werden.

Um diese Nachteile teilweise zu überwinden, wird in der EP 0 053 701 B1 ein textiles Flächengebilde vorgeschlagen, bei dem, im Unterschied zu dem aus der EP 0 013 428 B1 bekannten, die die Kugelgarne enthaltende Oberschicht nicht verfestigt ist, so dass die Kugelgarne ohne gegenseitigen Zusammenhalt vorliegen und lediglich an der Trägerschicht durch Haltefasern befestigt sind. Auch bei diesem Verfahren ist die Erzeugung von rapportfreien Oberflächen, wenn überhaupt, so nur mit einem unverhältnismäßig hohem Aufwand möglich.

Aus der WO 98/30745 ist ein Verfahren zur Herstellung eines flächigen Gebildes mit einer im Wesentlichen rapportfreien, optisch uneinheitlichen Oberseite bekannt, bei dem zunächst vorzugsweise verschiedenfarbige, später wenigstens teilweise die Nutzschicht ausbildende Elemente mit unterschiedlicher geometrischer Gestalt in eine Aufbringvorrichtung eingebracht und in dieser egalisiert verteilt werden. Anschließend werden die Elemente in einem egalisierten Aufbringstrom auf eine Trägerschicht aufgebracht, um abschließend mit der Trägerschicht, vorzugsweise durch Vernadelung, vereinigt zu werden. Da bei diesem Verfahren die farbigen Elemente durch den abschließenden Vernadelungsprozess mehr oder weniger stark zusammengedrückt und dadurch in ihrer Form und Struktur aufgelöst bzw. verändert werden, werden nur farbschwache und diffuse Oberflächenmusterungen erhalten.

Aufgabe der Erfindung ist es, ein textiles Flächengebilde mit einer optisch uneinheitlichen und im Wesentlichen rapportfreien Oberfläche zur Verfügung zu stellen, bei dem die das ggf. farbige Muster ergebenden Faserelemente weder in ihrer Form noch in ihrer Struktur wesentlich verändert werden, so dass kontrastreiche und strukturierte Oberflächen erhalten werden.

Diese Aufgabe wird durch ein textiles Flächengebilde der eingangs genannten Art gelöst, erhältlich durch ein Verfahren, bei dem aus den Stapelfasern und den ggf. als Faseraggregate ausgebildeten Faserelementen ein ggf. verfestigter Vliesstoff derart gebildet wird, dass die Faserelemente überwiegend auf einer Seite des Vliesstoffes angeordnet sind. Die Verfestigung des Vliesstoffes kann auf mechanischen und/oder chemischen und/oder thermischen Verfahren erfolgen. Anschließend wird der verfestigte Vliesstoff der Trägerschicht zugeführt und dann mit der Trägerschicht, ggf. mehrfach, derart vernadelt, dass der Vliesstoff die abriebfeste Nutzschicht bildet.

Überraschend hat sich gezeigt, dass durch die Anordnung der Faserelemente an der Oberfläche der der Trägerschicht gegenüberliegenden Seite des Vliesstoffes, bei der anschließenden Vernadelung des Vliesstoffs mit der Trägerschicht eine Verformung und Auflösung der Struktur der Faserelemente nur in geringem Umfang stattfindet, auch wenn diese, wie bevorzugt, als Faseraggregate ausgebildet sind. So kann auf einfache Weise ein textiles Flächengebilde mit einer - im Gegensatz zum Stand der Technik - kontrastreichen, strukturierten, optisch uneinheitlichen Oberfläche erhalten werden, welches dennoch eine hohe Abriebfestigkeit aufweist und somit z. B. auch als Bodenbelag verwendet werden kann. Die Musterung des erfindungsgemäßen textilen Flächengebildes kann durch die Wahl der Größe, der Faserart, der Form und der Farbe der Faserelemente bzw. -aggregate beliebig eingestellt werden. Darüber hinaus kann herstellungsbedingt eine rapportfreie Oberfläche des textilen Flächengebildes erreicht werden.

Grundsätzlich kann zur Erzeugung des verfestigten Vliesstoffes aus den Stapelfasern und den Faserelementen jedes dem Fachmann zur Herstellung von Vliesstoffen bekannte Verfahren verwendet werden, welches sich in der Weise verändern lässt, dass im Wesentlichen die Anordnung der Faserelemente auf einer Seite des Vliesstoffes gewährleistet ist. Vorzugsweise wird dies jedoch durch einen aerodynamischen Verfahrensschritt erreicht, bei dem eine Mischung aus geeigneten Stapelfasern und geeigneten Faserelementen in einen Luftstrom eingebracht und dieser Luftstrom gegen eine Sammelfläche, z. B. gegen eine perforierte, rotierende Trommel geblasen wird, auf deren Oberfläche die Fasern ein Vlies bilden, während die Luft durch die Öffnungen dieser Sammelfläche abgesaugt wird. Aufgrund der Unterschiede in den aerodynamischen Eigenschaften und dem spezifischen Gewicht zwischen den Stapelfasern und den Faserelementen lagern sich die kompakteren und schwereren Faserelemente in unregelmäßigen Abständen voneinander unmittelbar an der Oberfläche der perforierten Sammelfläche ab, während sich die leichteren Stapelfasern vornehmlich zwischen und auf die Faserelemente legen und eine durchgehende Vliesschicht bilden. Bei einem solchen aerodynamischen Verfahren besteht eine geringe mechanische Belastung der Faserelemente, auch wenn sie, wie bevorzugt, als Faseraggregate ausgebildet sind, so dass diese nur in geringem Maß in ihrer Form und Struktur verändert werden, und sie kommen systembedingt ohne besondere Maßnahmen auf einer Seite des Vliesstoffs zu liegen.

Sofern die Erzeugung des ggf. verfestigten Vliesstoffes durch ein aerodynamisches Verfahren erfolgt, werden vorzugsweise mechanische voraufgelöste Stapelfasern eingesetzt, da so die einzelnen Stapelfasern im Wesentlichen gleiche aerodynamische Eigenschaften aufweisen.

Ein weiterer Vorteil der Anwendung des aerodynamischen Verfahrens zur Bildung des ggf. verfestigten Vliesstoffes besteht darin, dass eine Mischeinrichtung zum Vermischen der Stapelfasern und der z. B. andersfarbigen Faserelemente vor der eigentlichen Vliesbildung integriert werden kann. Dies kann in der Weise verwirklicht werden, dass zunächst Luft in eine die Stapelfasern und die Faserelemente enthaltende Mischvorrichtung eingebracht wird, die dort durch entsprechende Vorrichtungen verwirbelt wird und zu einer vollständigen Durchmischung der Stapelfasern und der Faserelemente führt. Ein Teil dieses die Mischung aus Stapelfasern und Faserelemente enthaltenden Luftstroms kann dann kontinuierlich durch eine Blende aus der Mischvorrichtung abgeführt und der Vorrichtung zur Erzeugung des Vliesstoffes zugeführt werden. Dabei wird der Luftstrom vorzugsweise in eine laminare Strömung überführt und gegen die perforierte Sammelfläche geblasen. Die Sammelfläche kann z. B. von einer rotierenden Trommel gebildet werden.

Im Gegensatz zu einem solchen kontinuierlichen Verfahren ist auch eine diskontinuierlich betriebene Mischvorrichtung denkbar, welche ein engmaschiges, zur Auflage der Stapelfasern und der Faserelemente geeignetes Netz oder Gitter enthält. Zur Durchmischung dieser Ausgangsstoffe wird ein kurzzeitiger Luftstrom in die Mischvorrichtung eingebracht und von der den Ausgangsmaterialien abgewandten Seite aus durch dieses Netz bzw. Gitter geführt, wodurch die Stapelfasern und die Faserelemente von dem Luftstrom mitgerissen und vollständig durchmischt werden. Nach dem Ende des Luftstrompulses setzt sich die Mischung dann wieder auf dem Netz bzw. Gitter ab und kann mechanisch aus der Mischvorrichtung entfernt und der Vorrichtung zur Vliesbildung zugeführt werden, welche durch einen separaten Luftstrom gespeist wird.

Zur Durchmischung der Stapelfasern und der Faserelemente kann aber auch jedes andere dem Fachmann zu diesem Zweck bekannte Verfahren angewendet werden.

Vorzugsweise werden zur Herstellung des verfestigten Vliesstoffes Stapelfasern aus Polypropylen, Polyester, Polyamid oder Viskose eingesetzt.

Die Musterung der textilen Flächengebilde wird vornehmlich durch die Größe, Faserart, Form und Farbe der Faserelemente bestimmt, wobei durch die Verwendung einer Vielzahl an Faserelementen mit sich geometrisch voneinander unterscheidender Gestalt eine strukturierte Oberfläche erhalten wird, die aufgrund der Vermischung der Stapelfasern und der Faserelemente vor der Bildung des Vliesstoffes zudem rapportfrei ist. Daher bietet sich insbesondere die Verwendung von Faserelementen mit einer anderen Farbe als die der Stapelfasern an, wobei insbesondere durch die Verwendung von verschiedenfarbigen Faserelementen mehrfarbig strukturierte Oberflächen erhalten werden können.

In Abhängigkeit von der gewünschten Oberflächenstruktur der textilen Flächengebilde können als Faserelemente z. B. Garne, Zwirne, Noppen, sphärische Faseraggregate, Stanzteile und/oder aus Flächenware geschnittene Teile eingesetzt werden.

Durch die Wahl der Schnitt-/Stanzwerkzeuge sind Teile beliebiger Form herstellbar, bspw. solche mit kreisförmiger, ovaler, rechteckiger oder sonstiger polygonaler Form, so dass nahezu jedes gewünschte Muster erzeugt werden kann. Als Ausgangsmaterial für Schnitt-/ Stanzteile eignen sich textile Flächengebilde jeder Art, z. B. Vliesstoffe oder Filze.

Erfindungsgemäß wird der so hergestellte ggf. verfestigte Vliesstoff mit der den Faserelementen gegenüberliegenden Seite der Trägerschicht zugeführt, wobei die Trägerschicht bevorzugt aus Polypropylen-, Polyester-, Polyamid- und/oder Viskosefasern besteht.

Vorzugsweise wird als Trägerschicht ein abgetafelter Krempelflor verwendet. Als Trägerschicht kann aber z. B. auch ein in sonstiger Weise mechanisch und/oder chemisch und/oder thermisch verfestigter Vliesstoff, ein Gewebe, eine getuftete Flächenware oder ein Filz verwendet werden.

Zur Fertigstellung des textilen Flächengebildes wird die Trägerschicht mit dem ggf. verfestigten Vliesstoff vorzugsweise durch Vernadelung, besonders bevorzugt durch mehrfache Vernadelung, verbunden.

Um die Festigkeit des textilen Flächengebildes zu erhöhen, kann dieses z. B. durch Imprägnierung mit einem Bindemittel zusätzlich verfestigt werden.

In Weiterbildung des Erfindungsgedankens kann/können an der Unterseite der Trägerschicht eine oder mehrere weitere Trägerschicht(en) angebracht sein, beispielsweise eine Schwerbeschichtung, um dem textilen Flächengebilde weitere vorteilhafte Eigenschaften zu vermitteln.

Die erfindungsgemäßen textilen Flächengebilde bestehen aus wenigstens einer Trägerschicht und einer mit dieser vernadelten, eine optisch uneinheitliche und im Wesentlichen rapportfreie Oberfläche des Flächengebildes ausbildenden Nutzschicht, welche neben Stapelfasern eine Vielzahl an Faserelementen enthält, die sich in Farbe, Faserbeschaffenheit und/oder Form von den Stapelfasern unterscheiden. Indem erfindungsgemäß die Faserelemente im Wesentlichen an der Oberseite der Nutzschicht angeordnet und stochastisch über deren Fläche verteilt sind, sind rapportfreie Oberflächen erhalten, die zudem kontrastreich, strukturiert sowie optisch uneinheitlich ausgebildet sind, da während des Herstellungsverfahrens nur eine geringe Verformung oder partielle Auflösung der Struktur der vorzugsweise als Faseraggregate ausgebildeten Faserelemente stattfindet und diese somit weitgehend in ihrer ursprünglichen Form an der sichtbaren Oberfläche vorliegen. Darüber hinaus zeichnen sich die Flächengebilde gemäß der Erfindung durch eine hohe Abriebfestigkeit aus, weshalb sie auch als Bodenbelag oder dgl. strapazierfähige Beläge, beispielsweise als Fußmatten in Kraftfahrzeugen, verwendet werden können. Durch Anbringen weiterer Trägerschichten, beispielsweise einer Schwerbeschichtung, können diese Flächengebilde gezielt für spezielle Anwendungen, beispielsweise als selbstliegende Fliesen, optimiert werden.

Solche Flächengebilde werden vorzugsweise, aber nicht ausschließlich durch das erfindungsgemäße Verfahren hergestellt.

Weitere Ziele, Merkmale, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung.

Es zeigen:
- Fig. 1: schematisch im Querschnitt einen nach dem erfindungsgemäßen Verfahren als Zwischenprodukt erhaltenen ggf. verfestigten Vliesstoff,
- Fig. 2: schematisch im Querschnitt ein nach dem erfindungsgemäßen Verfahren hergestelltes textiles Flächengebilde, und
- Fig. 3: schematisch im Querschnitt ein nach dem Stand der Technik hergestelltes textiles Flächengebilde zum Vergleich.

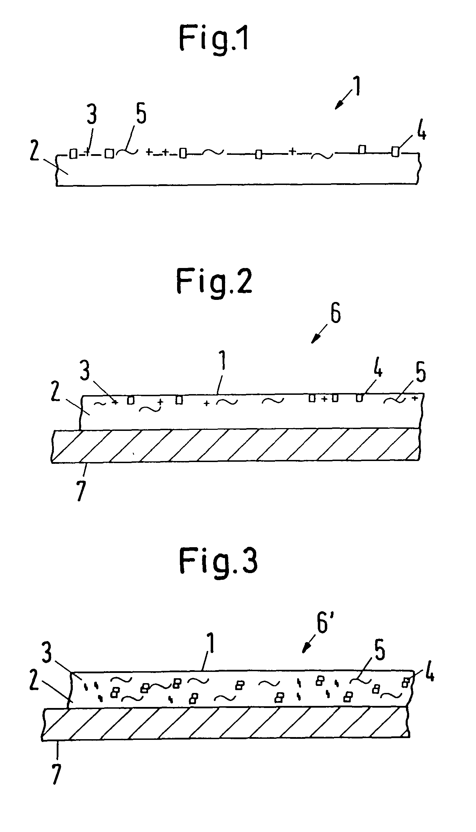

Der in Fig. 1 dargestellte, nach dem erfindungsgemäßen Verfahren als Zwischenprodukt erzeugte, vorzugsweise verfestigte Vliesstoff 1 besteht aus Stapelfasern 2 und drei verschiedenen, z. B. andersfarbigen Faserelementen 3, 4, 5. Um eine mehrfarbig strukturierte Musterung zu erhalten, sind als Beispiel drei Faserelemente 3, 4, 5 mit sich geometrisch voneinander unterscheidender Gestalt, nämlich sphärisch ausgebildete Faserelemente 3, noppenförmige Faserelemente 4 und fadenartige Faserelemente 5, eingesetzt. Die Herstellung dieses Vliesstoffes 1 erfolgte durch ein aerodynamisches Verfahren, bei dem voraufgelöste Stapelfasern 2 und die Faserelemente 3, 4, 5 zunächst durch eine turbulente Luftströmung in einer Mischvorrichtung gemischt und anschließend mittels eines laminaren Luftstromes gegen eine z.B. von einer rotierenden, perforierten Trommel gebildeten Sammelfläche geblasen werden. Während die Luft durch die Öffnungen der Sammelfläche abgesaugt wird, bildet sich auf deren Oberfläche ein wirres Vlies, bei dem aufgrund der unterschiedlichen aerodynamischen Eigenschaften die kompakteren und schweren Faserelemente 3, 4, 5 überwiegend an der der Sammelfläche zugewandeten Seite, die leichteren Stapelfasern 2 hingegen vornehmlich zwischen und hinter den Faserelementen 3, 4, 5 zu liegen kommen. Wegen der geringen mechanischen Belastung während des aerodynamischen Verfahrens, weisen die Faserelemente 3, 4, 5 im Vlies im Wesentlichen ihre ursprüngliche Form und Struktur auf. Eine ggf. vorgesehene Verfestigung des Vliesstoffes erfolgte dann nach mechanischen und/oder chemischen und/oder thermischen Verfahren.

In Fig. 2 ist ein textiles Flächengebilde 6 gemäß der vorliegenden Erfindung dargestellt, bei dem der verfestigte Vliesstoff 1 gemäß Fig.1 mit seiner den Faserelementen 3, 4, 5 abgewandten Unterseite auf eine in diesem Fall einschichtige, z. B aus Nadelvlies bestehende Trägerschicht 7 aufgebracht und mit dieser vernadelt wurde. Die Faserelemente 3, 4, 5 liegen auch nach dem Vernadelungsschritt stochastisch über die Fläche verteilt, im Wesentlichen in ihrer ursprünglichen Form und an der Sichtseite der Nutzschicht 1 vor, so dass sich eine kontrastreiche, mehrfarbig strukturierte und dazu rapportfreie Musterung auf der Oberfläche der Nutzschicht 1 ergibt.

Im Gegensatz dazu sind die Faserelemente 3, 4, 5 bei einem nach dem Stand der Technik hergestellten textilen Flächengebilde 6', wie aus der Fig. 3 ersichtlich, gleichmäßig über die Dicke der Nutzschicht verteilt und überdies durch die mechanische Belastung während des Herstellungsverfahrens, insbesondere bei der Vernadelung der Trägerschicht 7 mit der Nutzschicht 1, in ihrer Form und Struktur stark verändert weitgehend aufgelöst worden. Daher ergibt sich eine Oberflächenmusterung mit einer optisch einheitlichen, farbschwachen und zweidimensionalen Charakteristik.

### Bezugszeichenliste:

- 1: verfestigter Vliesstoff / Nutzschicht
- 2: Stapelfasern
- 3: sphärische Faserelemente
- 4: noppenförmige Faserelemente
- 5: fadenartige Faserelemente
- 6: textiles Flächengebilde nach der Erfindung
- 6': textiles Flächengebilde nach dem Stand der Technik
- 7: Trägerschicht

## Patentansprüche

1. Textiles Flächengebilde (6) aus wenigstens einer Trägerschicht (7) und einer mit dieser vernadelten, eine optisch uneinheitliche, rapportfreie Oberseite aufweisenden Nutzschicht (1), welche neben Stapelfasern (2) eine Vielzahl an stochastisch verteilten Faserelementen (3, 4, 5) mit vorgegebener geometrischer Gestalt enthält, welche sich in ihrer Farbe und/oder ihrer Beschaffenheit von den Stapelfasern unterscheiden, erhältlich durch ein Verfahren, bei dem
a) aus den Stapelfasern (2) und den z. B. als Faseraggregate ausgebildete Faserelementen (3, 4, 5) ein Vliesstoff (1) gebildet wird, bei dem die Faserelemente (3, 4, 5) überwiegend an einer Seite angeordnet werden,
b) der Vliesstoff (1) mit der den Faserelementen (3, 4, 5) gegenüberliegenden Seite der Trägerschicht (7) zugeführt wird, und
c) der Vliesstoff mit der Trägerschicht (7) derart vernadelt wird, dass der Vliesstoff die Nutzschicht (1) bildet.

2. Textiles Flächengebilde nach Anspruch 1, **dadurch gekennzeichnet, dass** die Nutzschicht stochastisch verteilte Faserelemente (3, 4, 5) mit vorgegebener, unterschiedlicher geometrischer Gestalt enthält.

3. Textiles Flächengebilde nach Anspruch 1 oder 2, **dadurch gekennzeichnet, dass** in Verfahrensschritt a) ein verfestigter Vliesstoff (1) gebildet wird.

4. Textiles Flächengebilde nach einem der vorhergehenden Ansprüche, **dadurch gekennzeichnet, dass** der Vliesstoff in Verfahrensschritt c) mehrfach vernadelt wird.

5. Textiles Flächengebilde nach einem der vorhergehenden Ansprüche, **dadurch gekennzeichnet, dass** der Vliesstoff (1) durch ein aerodynamisches Verfahren gebildet wird.

6. Textiles Flächengebilde nach einem der vorhergehenden Ansprüche, **dadurch gekennzeichnet, dass** zur Bildung des Vliesstoffes (1) die Stapelfasern (2) und die Faserelemente (3, 4, 5) in einem Luftstrom gegen eine perforierte Sammelfläche geblasen werden.

7. Textiles Flächengebilde nach einem der vorhergehenden Ansprüche, **dadurch gekennzeichnet, dass** zur Bildung des Vliesstoffes (1) mechanisch voraufgelöste Stapelfasern (2) eingesetzt werden.

8. Textiles Flächengebilde nach einem der vorhergehenden Ansprüche, **dadurch gekennzeichnet, dass** die Verfestigung des Vliesstoffes (1) nach mechanischen und/oder thermischen und/oder chemischen Verfahren erfolgt.

9. Textiles Flächengebilde nach einem der vorherigen Ansprüche, **dadurch gekennzeichnet, dass** die Stapelfasern (2) und die Faserelemente (3, 4, 5) vor der Bildung des Vliesstoffes (1) gemischt werden.

10. Textiles Flächengebilde nach Anspruch 9, **dadurch gekennzeichnet, dass** das Mischen aerodynamisch erfolgt.

11. Textiles Flächengebilde nach einem der vorherigen Ansprüche, **dadurch gekennzeichnet, dass** die Stapelfasern (2) aus Polypropylen, Polyester, Polyamid und/oder Viskose bestehen.

12. Textiles Flächengebilde nach einem der vorherigen Ansprüche, **dadurch gekennzeichnet, dass** Faserelemente (3, 4, 5) verschiedener Farben und/oder Faserbeschaffenheit und/oder verschiedener geometrischer Gestalt, z.B. Faseraggregate, eingesetzt werden.

13. Textiles Flächengebilde nach einem der vorherigen Ansprüche, **dadurch gekennzeichnet, dass** wenigstens ein Anteil der Vielzahl an Faserelementen (3, 4, 5) Garne, Zwirne, Noppen, sphärische Aggregate, Stanzteile und/oder aus Flächenware geschnittene Teile sind.

14. Textiles Flächengebilde nach einem der vorherigen Ansprüche, **dadurch gekennzeichnet, dass** die Stanzteile und/oder die geschnittenen Teile aus einem textilen Flächengebilde, insbesondere einem Vliesstoff oder einem Filz, bestehen.

15. Textiles Flächengebilde nach einem der vorherigen Ansprüche, **dadurch gekennzeichnet, dass** als Trägerschicht (7) ein Vlies, vorzugsweise ein abgetafelter Krempelflor, ein Vliesstoff, ein Gewebe, eine getuftete Flächenware oder ein Filz verwendet wird.

16. Textiles Flächengebilde nach einem der vorherigen Ansprüche, **dadurch gekennzeichnet, dass** eine Trägerschicht (7) aus Polypropylen-, Polyester-, Polyamid- und/oder Viskosefasern verwendet wird.

17. Textiles Flächengebilde nach einem der vorherigen Ansprüche, **dadurch gekennzeichnet, dass** eine durch mechanische Kardieren gebildete Trägerschicht (7) verwendet wird.

18. Textiles Flächengebilde nach einem der vorherigen Ansprüche, **dadurch gekennzeichnet, dass** die Trägerschicht (7) vor dem Aufbringen des die Nutzschicht (1) bildenden Vliesstoffes verfestigt wird.

19. Textiles Flächengebilde nach Anspruch 18, **dadurch gekennzeichnet, dass** die Trägerschicht (7) vor dem Aufbringen des die Nutzschicht (1) bildenden Vliesstoffes mechanisch, thermisch und/oder chemisch verfestigt wird.

20. Textiles Flächengebilde nach einem der vorherigen Ansprüche, **dadurch gekennzeichnet, dass** an der der Nutzschicht (1) gegenüberliegenden Seite der Trägerschicht (7) eine oder mehrere weitere Trägerschichten vorgesehen werden.

21. Textiles Flächengebilde nach einem der vorherigen Ansprüche, **dadurch gekennzeichnet, dass** das textile Flächengebilde (6) durch Imprägnierung mit einem Bindemittel verfestigt wird.
